# EUROPEAN PATENT SPECIFICATION

(11) **EP 2 790 529 B1**
(45) Date of publication and mention of the grant of the patent: **09.12.2015**
(21) Application number: 11810723.4
(22) Date of filing: 15.12.2011
(51) Int. Cl.: A23K 1/165, A23K 1/18

(54) **PET FOOD COMPOSITION WITH A SOFT TEXTURE**
HAUSTIERFUTTERZUSAMMENSETZUNG MIT WEICHER TEXTUR
COMPOSITION D'ALIMENT POUR ANIMAUX DE COMPAGNIE À TEXTURE MOLLE

(43) Date of publication of application: 22.10.2014
(73) Proprietor: Hill's Pet Nutrition, Inc., Topeka, KS 66603 (US)
(72) Inventor: MONTELONGO, Luis J., Lawrence, Kansas 66047 (US); KAPPELMAN, David, Olathe, Kansas 66062 (US)
(74) Representative: Daniels, Jeffrey Nicholas
(86) International application number: PCT/US2011/065039
(87) International publication number: WO 2013/089722

(56) References cited:
- EP-A1- 0 105 051
- WO-A1-84/00876
- WO-A2-03/049550
- US-A- 4 259 358
- US-A- 4 391 829
- US-A- 4 804 549
- US-A1- 2004 076 718

## Description

### FIELD OF THE INVENTION

The present invention relates to pet food compositions having a soft texture and processes for the preparation of soft-textured pet food compositions in which the starch component of the composition is partially digested with an amylase.

### BACKGROUND OF THE INVENTION

Pet food compositions are designed and formulated to provide a nutritionally complete diet for the animal for which the food is intended. Where the pet food is intended to serve as the primary if not sole source of nutrition for the animal, that food is to be formulated in compliance with very strict nutritional guidelines including, but not limited to, the levels of protein and fat in the pet food composition. One method for achieving the desired balance and relative concentrations of the required dietary components involves supplementation of the formulation with one or more carbohydrate components which generally comprise the polymeric materials amylose and amylopectin.

US 4391829 discloses an improved process for preparing a nutritionally-balanced dog food having improved palatability.

US2004/0076718 concerns a method for producing a dry pet food having increased palatability and a soft texture.

WO84/00876 and EP0105051 teach a soft, texturized food product prepared by a processing step involving temperatures up to 150°C.

Pet food compositions, particularly "wet" pet food compositions, are prepared by combining appropriate sources of water, protein, fat, carbohydrate and other nutritionally-required ingredients identified in the art, and cooking that mixture at an appropriate temperature and for sufficient time to blend the ingredients. The cooked mixture is distributed to containers that are then sealed and retorted to sterilize the pet food composition. However, during and after these manipulative processes, the starch components can hydrate, swell, and gelatinize. As the compositions cool, the starch polymers can rearrange, form intermolecular hydrogen bonds, and develop into relatively crystalline structures. This process, referred to as retrogradation, can create an undesirably firm structure in the final product which may be organoleptically-unacceptable as pet food.

Accordingly, there is a need for compositions that are both nutritionally and organoleptically acceptable as pet food compositions as well as for methods that can reproducibly provide those compositions.

### BRIEF SUMMARY

Soft-textured pet food compositions of the present disclosure are prepared according to a method in which a mixture comprising appropriate levels of water, protein, fat, and carbohydrate are treated with an amylase, particularly an endo-amylase, exo-amylase or mixtures thereof, to partially digest starch polymers of the mixture. The digestion can be performed either before or during the cook step, before the composition is subjected to the retorting process, or during the retorting process. The pet food compositions prepared in this manner are quantitatively softer than pet food compositions prepared in the same manner except for the amylase treatment.

In various embodiments, therefore, provided herein are soft-textured pet food compositions as well as methods for their preparation.

In one arrangement, the present invention provides a retorted pet food composition comprising from 10% to 60% protein on a dry matter basis, from 5% to 40% fat on a dry matter basis, from 30% to 65% carbohydrate on a dry matter basis, and at least one amylase, wherein the amylase is a temperature-labile amylase. The food composition is a wet food composition comprising from 30% to 80% water. The food composition comprises substantially no enzymatically-active amylase. The pet food composition has a soft texture, as demonstrated by the observation that it has a penetrating force that is within the range of from 10% to 80% of that of a pet food composition without added amylase. The pet food composition without added amylase is one prepared in the same manner except for omission of the addition of an amylase. In one aspect, the amylase employed is an endo-amylase, an exo-amylase, or mixtures thereof and the final, soft-textured pet food composition comprises substantially no enzymatically-active amylase.

In certain aspects, the amylase is present at a level of from 0.001% to 0.1%, from 0.005% to 0.05%, or from 0.01% to 0.025% of the total weight of the composition.

In certain aspects, the soft-textured pet food composition is nutritionally, oroganoleptically or both nutritionally and oroganoleptically adapted for a companion animal. In certain aspects, that companion animal is a canine or feline.

In certain aspects, the soft-textured pet foods disclosed herein have a penetrating force that is within the range of from 20% to 70%, from 10% to 60%, from 20% to 60%, from 10% to 40%, or from 20% to 40% of that of a pet food composition without added amylase.

In a further embodiment, the soft-textured pet food composition of the present disclosure is a wet pet food composition comprising a level of water within the range of from 35% to 65%, or from 40% to 60% of the total weight of the composition.

The present invention also provides a method for production of the soft-textured pet food compositions, the method comprising: (a) preparing a mixture comprising water, from 10% to 60% protein on a dry matter basis, from 5% to 40% fat on a dry matter basis, and from 30% to 65% carbohydrate on a dry matter basis; (b) contacting the mixture with an effective amount of a temperature-labile amylase and heating to a temperature from 48.9°C (120°F) to 104.4°C (220°F) for a time sufficient to provide an amylase-treated mixture; and (c) retorting the amylase-treated mixture, wherein the pet food composition has a soft texture, wherein the soft-textured pet food composition has a penetrating force that is within a range of from 10% to 80% of that of a pet food composition without added amylase, wherein the pet food composition comprises water in an amount within a range of from 30% to 80% of the total weight of the mixture, and wherein the pet food composition comprises substantially no enzymatically-active amylase.

In one aspect, the amylase employed is an endo-amylase, an exo-amylase, or mixtures thereof.

In certain aspects, the amylase is present at a level of from 0.001 % to 0.1 %, from 0.005% to 0.05%, or from 0.01% to 0.025% of the total weight of the composition.

In another aspect, the mixture comprises a level of water of from 35% to 65%, or from 40% to 60% of the total weight of the composition.

In still other aspects, the disclosed method of preparation of the soft-textured pet food product provides a composition having a penetrating force that is within the range of from 20% to 70%, from 10% to 60%, from 20% to 60%, from 10% to 40%, or from 20% to 40% of that of a pet food composition without added amylase.

The present disclosure is therefore also directed to soft-textured pet food compositions prepared according to the processes disclosed herein. In particular aspects of this embodiment, the soft-textured pet food composition is nutritionally, organoleptically or both nutritionally and organoleptically adapted for a companion animal. Is still further aspects of this embodiment, the companion animal is a canine or feline.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### DETAILED DESCRIPTION

The following description of the preferred embodiment(s) is merely exemplary in nature and is in no way intended to limit the invention, its application, or uses.

The soft-textured pet food compositions prepared according to the methods disclosed herein are demonstrably softer than a pet food compositions without added amylase. The pet food composition without added amylase is one prepared in the same manner except for omission of the addition of an amylase. The disclosed soft-textured pet food compositions are also substantially unchanged as compared to pet food compositions without added amylase with respect to digestibility. The disclosed compositions also do not create gastrointestinal issues in animals fed these soft-textured pet food compositions as indicated by the absence of a substantial change in the nature of the stool produced by animals fed a soft textured pet food composition of the present disclosure.

In various embodiments, therefore, provided herein are soft-textured pet food compositions as well as methods for their preparation.

In one arrangement, the present disclosure provides a pet food composition comprising from about 10% to about 60% protein on a dry matter basis, from about 5% to about 40% fat on a dry matter basis, from about 30% to about 65% carbohydrate on a dry matter basis and from about 30% to 80% water, and at least one amylase. The pet food compositions of this embodiment have a soft texture, as demonstrated by the observation that it has a penetrating force that is within the range of from about 10% to about 80% of that of a pet food composition without added amylase. The pet food composition without added amylase is one prepared in the same manner except for omission of the addition of an amylase. In one aspect of this embodiment, the amylase employed is an endo-amylase, an exo-amylase, or mixtures thereof. The final, soft-textured pet food composition comprises substantially no enzymatically active amylase. The amylase employed is a temperature-labile amylase and in one aspect, the final, soft-textured pet food composition comprises substantially no enzymatically active endo-amylase.

As contemplated herein, the compositions of the present invention may encompass nutritionally complete and balanced pet food compositions (also referred to herein simply as "nutritionally complete pet food compositions"). Nutritionally complete pet food compositions are familiar to one of skill in the art. For example, nutrients and ingredients such as those disclosed herein as well as others suitable for animal feed compositions, and recommended amounts thereof, may be found, for example, in the Official Publication of the Association of American Feed Control Officials ("AAFCO"), Inc., Nutrient Requirements of Dogs and Cats (2011). For example, nutritionally complete foods may contain protein, fat, carbohydrate, dietary fiber, amino acids, minerals, vitamins, and other ingredients in amounts known by those of skill in the art.

In addition to those components set forth in the Examples, protein may be supplied by any of a variety of sources known by those skilled in the art, including plant sources, animal sources, or both. Animal sources include, for example, meat, meat by-products, seafood, dairy, eggs, and the like. Meats include, for example, the flesh of poultry, fish, and mammals (e.g., cattle, pigs, sheep, goats, and the like). Meat by-products include, for example, lungs, kidneys, brain, livers, and stomachs and intestines (freed of all or essentially all their contents). The protein can be intact, almost completely hydrolyzed, or partially hydrolyzed.

In addition to those components set forth in the Examples, the fat can be supplied by any of a variety of sources known by those skilled in the art, including meat, meat by-products, fish oil, and plants. Plant fat sources include wheat, flaxseed, rye, barley, rice, sorghum, corn, oats, millet, wheat germ, corn germ, soybeans, peanuts, and cottonseed, as well as oils derived from these and other plant fat sources.

In addition to those components set forth in the Examples, the carbohydrate may be supplied by any of a variety of sources known by those skilled in the art, including oat fiber, cellulose, peanut hulls, beet pulp, parboiled rice, corn starch, corn gluten meal, and any combination of those sources. Grains supplying carbohydrate include, but are not limited to, wheat, corn, barley, and rice. Carbohydrate content of foods may be determined by any number of methods known by those of skill in the art. Generally, carbohydrate percentage may be calculated as nitrogen free extract ("NFE"), which may be calculated as follows: NFE=100%-moisture %-protein %-fat %-ash %-crude fiber %.

In certain embodiments of the present disclosure, the soft-textured pet food compositions may also comprise one or more fatty acids for inclusion selected from among omega 3 fatty acids such as docosahexanenoic acid (DHA), eicosapentaenoic acid (EPA), alpha-linolenic acid (ALA), octadecatetraenoic acid (stearidonic acid), or mixtures thereof.

In still other aspects of the present disclosure, the soft-texture pet food compositions may be formulated with dietary fiber. Dietary fiber refers to components of a plant which are resistant to digestion by an animal's digestive enzymes. Dietary fiber includes soluble and insoluble fibers. Soluble fiber are resistant to digestion and absorption in the small intestine and undergo complete or partial fermentation in the large intestine, e.g., beet pulp, guar gum, chicory root, psyllium, pectin, blueberry, cranberry, squash, apples, oats, beans, citrus, barley, or peas. Insoluble fiber may be supplied by any of a variety of sources, including cellulose, whole wheat products, wheat oat, corn bran, flax seed, grapes, celery, green beans, cauliflower, potato skins, fruit skins, vegetable skins, peanut hulls, and soy fiber. Crude fiber includes indigestible components contained in cell walls and cell contents of plants such as grains, e.g., hulls of grains such as rice, corn, and beans.

In certain other aspects, the soft-textured pet food compositions of the disclosure may also be formulated with amino acids, including essential amino acids, which may be added to the compositions of the present invention as free amino acids, or supplied by any number of sources, e.g., crude protein, to the compositions of the present invention. Essential amino acids are amino acids that cannot be synthesized *de novo,* or in sufficient quantities by an organism and thus must be supplied in the diet. Essential amino acids vary from species to species, depending upon the organism's metabolism. For example, it is generally understood that the essential amino acids for dogs and cats (and humans) are phenylalanine, leucine, methionine, lysine, isoleucine, valine, threonine, tryptophan, histidine and arginine. In addition, taurine, while technically not an amino acid but a derivative of cysteine, is an essential nutrient for cats.

The compositions of the present invention may also contain one or more minerals and/or trace elements, e.g., calcium, phosphorus, sodium, potassium, magnesium, manganese, copper, zinc, choline, or iron salts, in amounts required to avoid deficiency and maintain health. These amounts are known by those of skill in the art, for example, as provided in the Official Publication of the Association of American Feed Control Officials, Inc. ("AAFCO"), Nutrient Requirements of Dogs and Cats (2011).

The compositions of the present invention may also include vitamins in amounts required to avoid deficiency and maintain health. These amounts and methods of measurement are known by those skilled in the art. For example, the Official Publication of the Association of American Feed Control Officials, Inc. ("AAFCO"), Nutrient Requirements of Dogs and Cats (2011) provides recommended amounts of such ingredients for dogs and cats. As contemplated herein, useful vitamins may include, but are not limited to, vitamin A, vitamin B1, vitamin B2, vitamin B6, vitamin B12, vitamin C, vitamin D, vitamin E, vitamin H (biotin), vitamin K, folic acid, inositol, niacin, and pantothenic acid.

The compositions of the present invention may additionally comprise additives, stabilizers, fillers, thickeners, flavorants, palatability enhancers and colorants in amounts and combinations familiar to one of skill in the art. In certain aspects of this embodiment, the soft-textured pet food composition is nutritionally, organoleptically or both nutritionally and organoleptically adapted for a companion animal. In certain aspects, that companion animal is a canine or feline.

The soft-textured pet food compositions of the present disclosure comprise substantially no enzymatically-active amylase.

In certain embodiments, the soft-textured pet foods disclosed herein have a penetrating force that is within the range of from about 20% to about 80%, from about 10% to about 60%, from about 20% to about 60%, from about 10% to about 40%, or from about 20% to about 40% of that of a pet food composition without added amylase.

In a further embodiment, the soft-textured pet food composition of the present disclosure is a wet pet food composition comprising a level of water within the range of about 35% to about 65%, or from about 40% to about 60% of the total weight of the composition.

The present disclosure also provides a method for production of the soft-textured pet food compositions, the method comprising: (a) preparing a mixture comprising water, from about 10% to about 60% protein on a dry matter basis, from about 5% to about 40% fat on a dry matter basis, and from about 30% to about 65% carbohydrate on a dry matter basis; (b) contacting the mixture with an effective amount of a temperature-labile amylase and heating to a temperature from about 48.9°C (120°F) to about 104.4°C (220°F) for a time sufficient to provide an amylase treated mixture; and (c) retorting the amylase-treated mixture, wherein the pet food composition has a soft texture, wherein the soft-textured pet food composition has a penetrating force that is within a range of from about 10% to about 80% of that of a pet food composition without added amylase, wherein the pet food composition comprises water in an amount within a range of from about 30% to about 80% of the total weight of the mixture and wherein the pet food composition comprises substantially no enzymatically-active amylase.

In certain aspects of this embodiment, the amylase employed is an endo-amylase, exo-amylase, or mixtures thereof.

In certain aspects of this embodiment, the amylase is present at a level within the range of from about 0.001 % to about 0.1 %, from about 0.005% to about 0.05%, or from about 0.01 % to about 0.025% of the total weight of the composition.

The amylase may be combined with the core ingredients, *i.e.,* protein, fat, and carbohydrate during the initial blending steps, or may be added to the mixture after the initial blending steps (e.g., at a temperature of about 37.7°C (100°F)), but before initiation of the cooking steps at an elevated temperature (e.g., at a temperature within the range of from about 48.8°C (120°F) to about 104.4°C 220°F)). In other aspects, the amylase is added to the blend after initiation of the cooking step.

In other aspects of the methods disclosed herein, the amount of amylase, and the temperature and duration of the starch hydrolysis may be varied to provide a pet food composition having a desired softness of texture. In other aspects, the degree of desired softness of texture is a target level of softness that is exhibited by the pet food composition after curing for a substantial period of time, e.g., at least two weeks, to provide a product with an extended shelf life.

Amylases useful in the methods disclosed herein include, but are not to be limited to those set forth in the Examples. In certain embodiments, the amylase is a temperature-labile enzyme. In one aspect, this would be a level of enzyme that does not result in an increase in the softness of the composition upon extended storage or curing.

In another aspect, the amylase used in the methods disclosed herein is temperature-stable. In yet another aspect, the amylase is actually a mixture of enzymes designed to generate and maintain a defined level of softness of the texture of the pet food composition for an extended period of time subsequent to or after the retort process.

In another aspect of this embodiment, the mixture comprises a level of water within the range of from about 35% to about 65%, or from about 40% to about 60% of the total weight of the composition.

In still other embodiments, the disclosed method of preparation of the soft-textured pet food product provides a composition having a penetrating force that is within the range of from about 20% to about 80%, from about 10% to about 60%, from about 20% to about 60%, from about 10% to about 40%, or from about 20% to about 40% of that of a pet food composition without added amyalse.

The present disclosure is therefore also directed to soft-textured pet food compositions prepared according to the processes disclosed herein. In particular aspects of this embodiment, the soft-textured pet food composition is nutritionally, organoleptically or both nutritionally and organoleptically adapted for a companion animal. Is still further aspects of this embodiment, the companion animal is a canine or feline.

### Examples

### Example 1: Effects of Partial Digestion of Starch on Pet Food Composition Texture

Four pet food compositions (Formula 1 - Formula 4) were prepared according to the targeted ranges disclosed in Tables 1 - 4 below:

**Table 1**

| Ingredient | Amount (%) |
|---|---|
| Moisture | 77.6-78.4 |
| Protein | 3.8-4.5 |
| Fat | 1.6-2.2 |
| Ash | 1.0-1.1 |
| NFE | 12.4-13.0 |

The targeted ranges for the formulation of Formula 2 is present in Table 2 below:

**Table 2**

| Ingredient | Amount (%) |
|---|---|
| Moisture | 77.5-78.5 |
| Protein | 5.4-6.2 |
| Fat | 3.0-4.4 |
| Ash | 1.0-1.4 |
| NFE | 10.6-11.4 |

The targeted ranges for the formulation of Formula 3 is present in Table 3 below:

**Table 3**

| Ingredient | Amount (%) |
|---|---|
| Moisture | 77.0-79.0 |
| Protein | 5.5-7.1 |
| Fat | 3.2-6.7 |
| Ash | 1.3-2.2 |
| NFE | 7.9-9.6 |

The targeted ranges for the formulation of Formula 4 is present in Table 4 below:

**Table 4**

| Ingredient | Amount (%) |
|---|---|
| Moisture | 77.1-78.9 |
| Protein | 3.3-4.2 |
| Fat | 5.2-7.4 |
| Ash | 0.7-1.2 |
| NFE | 10.8-11.1 |

In each instance, the meat source, dry ingredients and water were mixed in a bowl and then heated to a temperature of approximately 37.8°C (100°F). At that point, an amylase was added to the test compositions and then heated to a temperature of 76.7°C (170°F) (amounts and types of amylase added to each as in Table 5.) The amylases used were a temperature-labile bacterial alpha-amylose of *Bacillus amyloliquefaciens* ((BAN 480 L^{®}) and a temperature-stable bacterial alpha-amylase of *Bacillus licheniformis* (Termanyl^{®} Classic); both are available from Novozymes (Denmark).

After the mixture was heated to 76.7°C (170°F), samples of each product were distributed to 12-ounce cans that were sterilized at 121.1°C (250°F) for 73 minutes. All of the samples were aged for at least 14 days before the texture was measured using a TA-TX2 Texture Analyzer (Texture Technologies Corporation, Scarsdale, New York) generally according to the manufacturer's instructions.

The control compositions were prepared in the same manner and with the same amounts of ingredients as the test compositions with the exception of no added amylase.

The texture data obtained for each of Formulations 1 - 4, with and without partial digestion with each enzyme, are summarized in Table 5 below.

**Table 5**

| Texture Determination: Applied Force for Penetration | | | |
|---|---|---|---|
| Composition | Treatment | Force (g) | Difference in Force: Test Formulation v. Control (%) |
| Formulation 1 | Control | 1109.1 | |
| | 0.001% Termamyl classic | 455.8 | 59 |
| | 0.005% Termamyl classic | 140.6 | 87 |
| Formulation 2 | Control | 755.1 | |
| | 0.001% BAN 480 L | 211.2 | 72 |
| | 0.005% BAN 480 L | 175.5 | 77 |
| Formulation 3 | Control | 897.6 | |
| | 0.001% BAN 480 L | 530.3 | 41 |
| | 0.005% BAN 480 L | 341.0 | 62 |
| Formulation 4 | Control | 1004.1 | |
| | 0.001% BAN 480 L | 512.2 | 49 |

The data above demonstrates that partial starch digestion of each amylase tested softened the texture of each of Formulations 1 - 4, as compared to the same formulation that had not been treated with an amylase. In each instance less force was required to penetrate the amylase-treated products as compared to the control. The data also demonstrated that the extent of softening and therefore the nature of the softened texture of the product can be controlled by varying the level of enzyme employed in the digestion reaction.

### Example 2: Effect of pH on the Activity of the Amylases

The pH optima of both the BAN 480 L and Termamyl classic amylases are believed to be within the range of from about pH 5 to about pH 7. Accordingly, the pH of each of the final products above was determined to evaluate whether the pH was compatible with optimal enzyme activity. The data obtained are presented in Table 6 below:

**Table 6**

| Composition | Measured pH |
|---|---|
| Formula 1 | 5.6 - 5.7 |
| Formula 2 | 6.2 - 6.4 |
| Formula 3 | 6.2 - 6.4 |
| Formula 4 | 6.6 - 6.8 |

The data of Table 6 indicate that the pH of each of Formulations 1 - 4 was with the range that would be predicted for optimal activity of both the BAN 480 L and Termamyl classic alpha-amylases employed.

### Example 3: Effect of Temperature on the Extent of Digestion with BAN 480 L

This experiment was carried out to determine the level of digestion observed at different temperatures. For this experiment, Formulation 1 (Example 1) was used as the substrate and BAN 480 L alpha-amylase as the amylase.

Different batches of the composition of Formulation 1 were prepared as described in Example 1. The enzyme, BAN 480 L alpha-amylase, was added to a level of 0.001% (of the total weight of the composition), and the individual samples were heated to a temperature of 48.9°C (120°F), 60°C (140°F), 70°C (158°F), 80°C (176°F) and 90°C (194°F). The control samples were also prepared as in Example 1 and heated to a temperature of 170°F. All samples were dispensed into cans, sealed, and sterilized as in Example 1. The extent of hydrolysis is indicated by the level of starch remaining and the total sugar levels observed and the data are presented in Table 7.

**Table 7**

| Temp. | Starch (%) | Total Sugars (%) |
|---|---|---|
| Control | 11.2 | 2.4 |
| 120°F | 12.3 | 1.3 |
| 140°F | 10.7 | 3.2 |
| 158°F | 8.5 | 3.5 |
| 176°F | 9.7 | 2.0 |
| 194°F | 12.4 | 1.6 |

The data obtained demonstrate that, under these conditions, the maximum hydrolysis is observed at a temperature of 158°F and that little hydrolysis is observed at a temperature above 180°F.

### Example 4: Maximum Hydrolysis Temperature for Alpha-Amylase

As indicated in the preceding experiment, maximum hydrolysis is observed at a temperature of 60°C to 71.1°C (140°F to 160°F). An experiment was carried to determine the temperature at which this illustrative alpha-amylase would be inactivated, to allow preparation of a formulation that, after sterilization, would not include any residual, enzymatically-active alpha-amylase.

Different batches of the composition of Formulation 1 were prepared as described in Example 1. The enzyme, BAN 480 L alpha-amylase, was added to a level of 0.001% (of the total weight of the composition), and the individual samples were heated to a temperature of 71.1°C (160°F), 82.2°C (180°F), 87.8°C (190°F), and 93.3°C (200°F). The control samples were also prepared as in Example 1 and heated to a temperature of 76.7°C (170°F). All samples were dispensed into cans, sealed, and sterilized as in Example 1. The extent of hydrolysis is indicated by the level of starch remaining and the total sugar levels observed and the data are presented in Table 8.

**Table 8**

| Temp. | Starch (%) | Total Sugars (%) |
|---|---|---|
| Control | 12.0 | 1.6 |
| 160°F | 10.0 | 2.3 |
| 180°F | 12.4 | 0 |
| 190°F | 12.9 | 0 |
| 200°F | 13.2 | 0 |

The data above demonstrate that, under these conditions, the maximum hydrolysis is observed at a temperature of within the range of 140°F to 160°F.

### Example 5: Effect of Temperature and Time on Starch Hydrolysis

An experiment was carried out to determine the effects of both temperature and time on the degree of starch hydrolysis using an amylase. The model used involved a composition of Formulation 1 (Example 1) and BAN 480 L alpha-amylase as the amylase.

Different batches of the composition of Formulation 1 were prepared as described in Example 1. In this experiment, after the initial mixing at 100°F, BAN 480 L alpha-amylase was added at a level of 0.001% of the composition and the temperature of each of the individual batches of Formulation 1 was raised to the indicated temperature (i.e., 48.9°C (120°F), 65.6°C (150°F) and 82.2°C (180°F).) Samples were taken at the point where the indicated temperature was reached ("time zero"), and 30 and 60 minutes thereafter. The control samples were also prepared as in Example 1 and heated to 76.7°C (170°F). All samples were dispensed into cans, sealed, and sterilized as in Example 1. The extent of hydrolysis is indicated by the level of starch remaining and the total sugar levels observed and the data are presented in Table 9.

**Table 9**

| Temp and Time | Starch (%) | Total Sugars (%) |
|---|---|---|
| Control | 12.3 | 1.5 |
| 120°F / 0 min. | 12.0 | 1.1 |
| 120°F / 30 min. | 13.0 | 1.2 |
| 120°F / 60 min. | 12.2 | 1.5 |
| 150°F / 0 min. | 10.7 | 2.1 |
| 150°F / 30 min. | 9.3 | 2.9 |
| 150°F / 60 min. | 9.5 | 3.3 |
| 180°F / 0 min. | 12.5 | 1.0 |
| 180°F / 30 min. | 12.0 | 0.9 |
| 180°F / 60 min. | 12.4 | 0.8 |

The data above demonstrate that optimal digestion of starch is observed at 150°F within the range of 0 to 60 minutes under these conditions.

### Example 6: Pet Food Composition Analyses After Curing and After Freeze/Thaw Cycles.

The composition of Formula 1 was prepared as described in Example 1. The grain mix, meat mix, and liquids were combined and blended to provide a homogenous mass and heated to a temperature of 37.8°C to 43.3°C (100°F to 110°F) before addition of the amylase as an aqueous solution to each sample to provide the intended final concentration of enzyme, *i.e.,* 0.001%, 0.005%, 0.010%, 0.050% and 0.100% BAN 480 L alpha-amylase. Each of the blends, including the control blend without added amylase, was cooked at a temperature of 76.7°C-79.4°C (170°F - 175°F). After cooking, the mixtures were pumped to a can line seamer/filler by means of a pump and distributed to 12 ounce cans before retorting at 121.1°C (250°F) for 73 minutes.

After curing the product for two weeks, the texture of each of the samples was measured with a TA-XT2 Analyzer (Texture Technologies Corporation, Scarsdale, New York) generally according to the manufacturer's instructions.

Additional samples of the cured compositions were subjected to three freeze/thaw cycles, in order to induce starch retrogradation. The texture of the samples treated in this manner were again analyzed as above. The control sample had become dry and crumbly after these treatments, and exhibited a much harder texture. The data obtained are presented in Table 10.

**Table 10**

| Sample (% α-Amylase) | Force (g) Required for Penetration | | Force (g) Required For Penetration | |
|---|---|---|---|---|
| | Two week curing | Difference in Force: Test Formulation v. Control (%) | Freeze / Thaw | Difference in Force: Test Formulation v. Control (%) |
| Control | 1001 | | 1900 | |
| 0.001% | 961 | 4 | 1409 | 26 |
| 0.005% | 872 | 13 | 1483 | 22 |
| 0.010% | 264 | 74 | 855 | 55 |
| 0.050% | 219 | 77 | 500 | 74 |
| 0.100% | 187 | 81 | 600 | 68 |

The data of Table 10 demonstrate that addition of alpha-amylase provided a soft-texture pet food composition as compared to the control samples, since the latter samples required a greater amount of force to penetrate the structure of the composition.

### Example 7: Digestibility Studies

Digestibility studies were carried out using the composition of Formula 1 (Example 1) digested with either 0.01%, 0.05%, or 0.10% BAN 480 L, according to standard procedures. Six dogs were fed the indicated diet for 14 days and fecal output collected on days 11 through 14. Both diet and feces were analyzed for protein, fat, fiber, ash, nitrogen free extract ("NFE"), and energy. The data are expressed as a percentage of recovered material as compared to the diet fed and are presented in Table 11.

**Table 11**

| Digestibility | Expected Values | Control | Alpha-Amylase Level | | |
|---|---|---|---|---|---|
| | | | 0.01% | 0.05% | 0.10% |
| Dry matter (%) | 65 | 74.5 | 76.0 | 71.1 | 71.3 |
| True Protein (%) | 70 | 79.8 | 78.8 | 80.0 | 79.6 |
| Energy (%) | 65 | 73.9 | 76.7 | 73.3 | 73.5 |
| Vital Nutrients (%) | 75 | 83.5 | 84.5 | 81.7 | 81.8 |

The data of Table 11 demonstrate that the soft-texture pet food compositions of the present disclosure exhibit digestibility properties substantially equivalent to the untreated controls.

### Example 8: Stool Studies

Stool studies were conducted, comparing the pet food composition of Formula 1 (Example 1) either without (control) or with starch digestion carried out as in Example 1 using 0.01%, 0.05%, and 0.10% BAN 480 L as the amylase. The stool studies were carried out with 10 animals fed a maintenance level of each formulation. The stools are scored on a scale of 1 to 5, with values of 3 or higher being preferred. The data obtained are presented in FIG. 10 and Table 12.

**Table 12**

| Sample | Stools Rating | | | |
|---|---|---|---|---|
| | 1 & 2 | 3 | 4 | 5 |
| Control | 0 | 3.6 | 28.6 | 67.9 |
| 0.01% α-amylase | 1.9 | 3.7 | 35.2 | 59.3 |
| 0.05% α-amylase | 3.5 | 0 | 29.8 | 66.7 |
| 0.10% α-amylase | 1.7 | 1.7 | 20.3 | 76.3 |

The data of Table 12 demonstrate that feeding the animals the soft-textured pet food compositions of the present disclosure resulted in the production of comparable stools as compared to those produced by animals fed the control composition.

As used throughout, ranges are used as shorthand for describing each and every value that is within the range. Any value within the range can be selected as the terminus of the range.

## Claims

1. A retorted pet food composition comprising:
from 10% to 60% protein on a dry matter basis;
from 5% to 40% fat on a dry matter basis; and
from 30% to 65% carbohydrate on a dry matter basis; and
at least one amylase, wherein the amylase is a temperature-labile amylase;
wherein the pet food composition has a soft texture;
wherein the pet food composition has a penetrating force that is within the range of from 10% to 80% of that of a pet food composition without added amylase, and wherein the composition comprises substantially no enzymatically-active amylase;
and wherein the composition is a wet pet food composition comprising from 30% to 80% water.

2. The pet food composition of claim 1 wherein the amylase is an endo-amylase, an exo-amylase, or mixtures thereof.

3. The pet food composition of claim 1 or claim 2, wherein the amylase is present in an amount from 0.001% to 0.1% of the total weight of the mixture, and optionally in an amount from 0.005% to 0.5% of the total weight of the mixture.

4. The pet food composition of any preceding claim, wherein the pet food composition is nutritionally or organoleptically adapted for a companion animal.

5. The pet food composition of claim 4, wherein the companion animal is a canine or feline.

6. The pet food composition of any preceding claim, wherein the pet food composition has a penetrating force that is within the range of from 10% to 60% of that of a pet food composition without an added amylase.

7. The pet food composition of claim 6, wherein the pet food composition has a penetrating force that is within the range of from 10% to 40% of that of a pet food composition without an added amylase.

8. The wet pet food composition of any preceding claim, wherein the wet pet food composition comprises from 40% to 60% water.

9. A process for preparing a pet food composition, the process comprising:
a) preparing a mixture comprising water, from about 10% to about 60% protein on a dry matter basis, from 5% to 40% fat on a dry matter basis, and from 30% to 65% carbohydrate on a dry matter basis;
b) contacting the mixture with an effective amount of an amylase, and heating to a temperature from 48.9°C (120°F) to 104.4°C (220°F) for a time sufficient to provide an amylase-treated mixture; and
c) retorting the amylase-treated mixture; and
wherein the pet food composition has a soft texture,
wherein the pet food composition comprises water in an amount within a range of from 30% to 80% of the total weight of the mixture;
wherein the pet food composition comprises substantially no enzymatically active amylase;
wherein the pet food composition has a penetrating force that is within the range of from 10% to 80% of that of a pet food composition without added amylase;
and wherein the amylase is temperature-labile.

10. The process of claim 9, wherein the amylase is an endo-amylase, an exo-amylase, or mixtures thereof.

11. The process of claim 9 or claim 10, wherein the amylase is present in an amount within a range of from 0.001% to 0.1% of the total weight of the mixture.

12. The process of claim 11, wherein the amylase is present in an amount within a range of from 0.005% to 0.5% of the total weight of the mixture

13. The process of any of claims 9 to 12, wherein the mixture comprises water in an amount within a range of from 40% to 60% of the total weight of the mixture.

14. The process of any one of claims 9 to 13, wherein the temperature is within a range of from 60°C (140°F) to 93.3°C (200°F).

15. The process of any one of claims 9 to 14, wherein the amylase is a temperature-labile endo-amylase, exo-amylase, or mixture thereof.

## Patentansprüche

1. In der Retorte erhitzte Haustierfutterzusammensetzung, umfassend:
von 10 % bis 60 % Protein auf einer Trockensubstanzbasis;
von 5 % bis 40 % Fett auf einer Trockensubstanzbasis; und
von 30 % bis 65 % Kohlenhydrate auf einer Trockensubstanzbasis; und
mindestens eine Amylase, wobei die Amylase eine temperaturlabile Amylase ist;
wobei die Haustierfutterzusammensetzung eine weiche Textur besitzt;
wobei die Haustierfutterzusammensetzung eine Durchdringungskraft aufweist, die im Bereich von 10 % bis 80 % von der einer Haustierfutterzusammensetzung ohne Zusatz von Amylase liegt; und
wobei die Zusammensetzung im Wesentlichen keine enzymatisch aktive Amylase enthält;
und wobei die Zusammensetzung eine Nassfutterzusammensetzung für Haustiere ist, die von 30 % bis 80 % Wasser enthält.

2. Haustierfutterzusammensetzung nach Anspruch 1, wobei die Amylase eine Endoamylase, eine Exoamylase oder Gemische davon ist.

3. Haustierfutterzusammensetzung nach Anspruch 1 oder Anspruch 2, wobei die Amylase in einer Menge von 0,001 % bis 0,1 % bezogen auf das Gesamtgewicht des Gemischs und gegebenenfalls in einer Menge von 0,005 % bis 0,5 % bezogen auf das Gesamtgewicht des Gemischs vorliegt.

4. Haustierfutterzusammensetzung nach einem der vorangehenden Ansprüche, wobei die Haustierfutterzusammensetzung ernährungsphysiologisch und organoleptisch für ein Heimtier angepasst ist.

5. Haustierfutterzusammensetzung nach Anspruch 4, wobei das Heimtier ein Hund oder eine Katze ist.

6. Haustierfutterzusammensetzung nach einem der vorangehenden Ansprüche, wobei die Haustierfutterzusammensetzung eine Durchdringungskraft aufweist, die im Bereich von 10 % bis 60 % von der einer Haustierfutterzusammensetzung ohne Zusatz von Amylase liegt.

7. Haustierfutterzusammensetzung nach Anspruch 6, wobei die Haustierfutterzusammensetzung eine Durchdringungskraft aufweist, die im Bereich von 10 % bis 40 % von der einer Haustierfutterzusammensetzung ohne Zusatz von Amylase liegt.

8. Nassfutterzusammensetzung für Haustiere nach einem der vorangehenden Ansprüche, wobei die Nassfutterzusammensetzung für Haustiere von 40 % bis 60 % Wasser enthält.

9. Verfahren zur Herstellung einer Haustierfutterzusammensetzung, wobei das Verfahren Folgendes umfasst:
a) Herstellen eines Gemischs, das Wasser, von ca. 10 % bis ca. 60 % Protein auf einer Trockensubstanzbasis, von 5 % bis 40 % Fett auf einer Trockensubstanzbasis und von 30 % bis 65 % Kohlenhydrate auf einer Trockensubstanzbasis enthält;
b) Inkontaktbringen des Gemischs mit einer wirksamen Menge einer Amylase, und Erhitzen auf eine Temperatur von 48,9 °C (120 °F) bis 104,4 °C (220 °F) für eine Zeit, die zur Bereitstellung eines mit Amylase behandelten Gemischs ausreicht; und
c) Erhitzen in der Retorte des mit Amylase behandelten Gemischs; und wobei die Haustierfutterzusammensetzung eine weiche Textur aufweist,
wobei die Haustierfutterzusammensetzung Wasser in einer Menge im Bereich von 30 % bis 80 % bezogen auf das Gesamtgewicht des Gemischs enthält;
wobei die Haustierfutterzusammensetzung im Wesentlichen keine enzymatisch aktive Amylase enthält;
wobei die Haustierfutterzusammensetzung eine Durchdringungskraft aufweist, die im Bereich von 10 % bis 80 % von der einer Haustierfutterzusammensetzung ohne Zusatz von Amylase liegt;
und wobei die Amylase temperaturlabil ist.

10. Verfahren nach Anspruch 9, wobei die Amylase eine Endoamylase, eine Exoamylase oder Gemische davon ist.

11. Verfahren nach Anspruch 9 oder Anspruch 10, wobei die Amylase in einer Menge im Bereich von 0,001 % bis 0,1 % bezogen auf das Gesamtgewicht des Gemischs vorliegt.

12. Verfahren nach Anspruch 11, wobei die Amylase in einer Menge im Bereich von 0,005 % bis 0,5 % bezogen auf das Gesamtgewicht des Gemischs vorliegt.

13. Verfahren nach einem der Ansprüche 9 bis 12, wobei das Gemisch Wasser in einer Menge im Bereich von 40 % bis 60 % bezogen auf das Gesamtgewicht des Gemischs enthält.

14. Verfahren nach einem der Ansprüche 9 bis 13, wobei die Temperatur im Bereich von 60 °C (140 °F) bis 93,3 °C (200 °F) liegt.

15. Verfahren nach einem der Ansprüche 9 bis 14, wobei die Amylase eine temperaturlabile Endoamylase, Exoamylase oder ein Gemisch davon ist.

## Revendications

1. Composition autoclavée d'aliments pour animaux de compagnie comprenant :
de 10 % à 60 % de protéine sur matière sèche ;
de 5 % à 40 % de matières grasses sur matière sèche ; et
de 30 % à 65 % de glucide sur matière sèche ; et
au moins une amylase, l'amylase étant une amylase thermolabile ;
dans laquelle la composition d'aliments pour animaux de compagnie a une texture molle ;
dans laquelle la composition d'aliments pour animaux de compagnie a une force de pénétration qui se situe entre les limites de 10 % et 80 % de celle d'une composition d'aliments pour animaux de compagnie sans addition d'amylase ; et
dans laquelle la composition comprend substantiellement aucune amylase activée enzymatiquement ;
et dans laquelle la composition est une composition humide d'aliments pour animaux de compagnie comprenant 30 % à 80 % d'eau.

2. Composition d'aliments pour animaux de compagnie selon la revendication 1, dans laquelle l'amylase est une endo-amylase, une exo-amylase, ou des mélanges des deux.

3. Composition d'aliments pour animaux de compagnie selon la revendication 1 ou la revendication 2, dans laquelle l'amylase est présente en une quantité comprise entre 0,001 % et 0,1 % du poids total du mélange, et facultativement en une quantité comprise entre 0,005 % et 0,5 % du poids total du mélange.

4. Composition d'aliments pour animaux de compagnie selon l'une quelconque des revendications précédentes, dans laquelle la composition d'aliments pour animaux de compagnie est nutritionnellement ou organoleptiquement adaptée pour un animal de compagnie.

5. Composition d'aliments pour animaux de compagnie selon la revendication 4, dans laquelle l'animal de compagnie est un canin ou un félin.

6. Composition d'aliments pour animaux de compagnie selon l'une quelconque des revendications précédentes, dans laquelle la composition d'aliments pour animaux de compagnie a une force de pénétration qui est comprise entre les limites de 10 % et 60 % de celle d'une composition d'aliments pour animaux de compagnie sans addition d'une amylase.

7. Composition d'aliments pour animaux de compagnie selon la revendication 6, dans laquelle la composition d'aliments pour animaux de compagnie a une force de pénétration qui est comprise entre les limites de 10 % et 40 % de celle d'une composition d'aliments pour animaux de compagnie sans addition d'une amylase.

8. Composition humide d'aliments pour animaux de compagnie selon l'une quelconque des revendications précédentes, dans laquelle la composition humide d'aliments pour animaux de compagnie comprend 40 % à 60 % d'eau.

9. Processus de préparation d'une composition d'aliments pour animaux de compagnie, ledit processus comprenant les étapes qui consistent à :
a) préparer un mélange comprenant de l'eau, entre environ 10 % et environ 60 % de protéine sur matière sèche, entre 5 % et 40 % de matières grasses sur matière sèche, et entre 30 % et 65 % de glucide sur matière sèche ;
b) mettre le mélange en contact avec une quantité efficace d'une amylase, et chauffer à une température comprise entre 48,9 °C (120 °F) et 104,4 °C (220 °F) pendant une durée suffisante pour obtenir un mélange traité par amylase ; et
c) passer le mélange traité par amylase à l'autoclave ; et
dans laquelle la composition d'aliments pour animaux de compagnie a une texture molle,
dans laquelle la composition d'aliments pour animaux de compagnie contient de l'eau en une quantité comprise entre 30 % et 80 % du poids total du mélange ;
dans laquelle la composition d'aliments pour animaux de compagnie comprend substantiellement aucune amylase activée enzymatiquement ;
dans laquelle la composition d'aliments pour animaux de compagnie se trouve entre les limites de 10 % et 80 % de celle d'une composition d'aliments pour animaux de compagnie sans addition d'amylase ;
et dans laquelle l'amylase est thermolabile.

10. Processus selon la revendication 9, dans lequel l'amylase est une endo-amylase, une exo-amylase, ou des mélanges des deux.

11. Processus selon la revendication 9 ou la revendication 10, dans lequel l'amylase est présente en une quantité comprise entre les limites de 0,001 % et 0,1 % du poids total du mélange.

12. Processus selon la revendication 11, dans lequel l'amylase est présente en une quantité comprise entre les limites de 0,005 % et 0,5 % du poids total du mélange.

13. Processus selon l'une quelconque des revendications 9 à 12, dans lequel le mélange comprend de l'eau en une quantité comprise entre les limites de 40 % et 60 % du poids total du mélange.

14. Processus selon l'une quelconque des revendications 9 à 13, dans lequel la température est comprise entre les limites de 60 °C (140 °C) et 93,3 °C (200 °F).

15. Processus selon l'une quelconque des revendications 9 à 14, dans lequel l'amylase est une endo-amylase ou une exo-amylase thermolabile, ou un mélange des deux.
